# EUROPÄISCHE PATENTSCHRIFT

(11) **EP 3 536 987 B1**
(45) Veröffentlichungstag und Bekanntmachung des Hinweises auf die Patenterteilung: **11.11.2020**
(21) Anmeldenummer: 18160405.9
(22) Anmeldetag: 07.03.2018
(51) Int. Cl.: F16B 13/12, E04B 1/76

(54) **SYSTEM UND VERFAHREN ZUR BEFESTIGUNG EINES DÄMMSTOFFS**
METHOD AND SYSTEM FOR FIXING AN INSULATING MATERIAL
SYSTÈME ET PROCÉDÉ DE FIXATION D'UNE MATÉRIAU ISOLANT

(43) Veröffentlichungstag der Anmeldung: 11.09.2019
(73) Patentinhaber: EJOT Baubefestigungen GmbH, 57334 Bad Laasphe (DE)
(72) Erfinder: KNEBEL, Ulrich, 57319 Bad Berleburg (DE); SCHÄFER, Wolfgang, 57334 Bad Laasphe (DE); DREHER, Christian, 35216 Biedenkopf (DE)
(74) Vertreter: Hohgardt, Martin

(56) Entgegenhaltungen:
- EP-A1- 3 318 685
- WO-A1-2008/017347
- DE-A1-102011 052 039
- DE-U1-202014 010 156

## Beschreibung

Die vorliegende Erfindung betrifft ein Befestigungssystem insbesondere zur Befestigung eines Dämmstoffs an einem Untergrund und ein entsprechendes Verfahren.

Im Stand der Technik sind diverse Befestigungssysteme bekannt, mit denen ein Dämmstoff an einem Untergrund befestigt werden kann. Beispiele sind in DE 20 2014 010 156 U1 und in EP 3 318 685 A1 beschrieben. Derartige Befestigungssysteme bestehen häufig aus einem Dübel und einem Spreizelement. Der Dübel und das Spreizelement weisen häufig Mittel auf, die zusammen bewirken, dass der Dübel in dem Untergrund verankert wird. Der Dübel weist darüber hinaus häufig einen Teller auf, der nach der Montage außen auf dem Dämmstoff oder in einer Ausnehmung in dem Dämmstoff aufliegt. Damit der Teller mit einem gewissen Druck auf dem Dämmstoff aufliegen kann, ist der Dübel häufig derart ausgestaltet, dass der Abstand zwischen dem Teller und der Verankerung im Untergrund verändert werden kann, meistens zumindest verkürzt. Derartige Dübel werden als teleskopierbare Dübel bezeichnet.

Bei der Montage derartiger Dübel ist es wichtig, dass der Monteur sicher sein kann, dass der Verankerungsbereich des Dübels in ausreichender Tiefe in dem Untergrund angeordnet ist, damit durch das Eintreiben des Spreizelements eine ausreichend hohe Auszugskraft erzielt wird. Bei nicht-teleskopierbaren Dübel erkennt dieses der Monteur beispielsweise daran, ob der Teller des Dübels auf dem Dämmstoff aufliegt. Bei teleskopierbaren Dübeln kann der Monteur von der Position des Tellers aber nicht auf die Anordnung des Verankerungsbereichs in dem Untergrund schließen, da sich beim Einbringen des Dübels in einem Bohrloch der Abstand zwischen dem Verankerungsbereich und dem Teller verändert haben kann.

Die Aufgabe der vorliegenden Erfindung ist daher ein Befestigungssystem und ein Verfahren zur Montage des Befestigungssystems bereit zu stellen, bei dem derartige Probleme nicht auftreten.

Diese Aufgabe wird durch das Befestigungssystem und das Verfahren gelöst, die in den unabhängigen Ansprüchen definiert sind. Bevorzugte Ausführungsformen ergeben sich aus den Unteransprüchen und der folgenden detaillierten Beschreibung. Erfindungsgemäß wird die Aufgabe durch ein Befestigungssystem zur Befestigung eines Dämmstoffs an einem Untergrund gelöst. Das Befestigungssystem weist mindestens zwei Teile auf, einen Dübel und ein Befestigungselement. Der Dübel wiederum erfüllt zwei Funktionen. Der Dübel sorgt mit Hilfe seines Befestigungsbereichs für die Befestigung des Dübels in dem Untergrund. Der Befestigungsbereich ist hierfür zumindest teilweise derart ausgestaltet, dass er zusammen mit einem entsprechenden Bereich des Befestigungselements die Befestigung bewirkt. Beispielsweise kann der Befestigungsbereich ein Bereich sein, der ausgestaltet ist, um von dem Befestigungselement aufgespreizt beziehungsweise aufgeweitet zu werden. Ein dafür geeignetes Befestigungselement wird auch als Spreizelement bezeichnet. Dem Fachmann sind aber auch andere Verfahren und Mittel bekannt, mit denen ein Dübel in dem Untergrund befestigt werden kann.

Außerdem weist der Dübel einen Haltebereich auf. Dieser Bereich ist ausgestaltet, um den zu befestigenden Dämmstoff zu halten. Im Rahmen der vorliegenden Erfindung weist der Haltebereich ein Haltemittel auf, das den Dämmstoff hält. Ein Beispiel für ein Haltemittel ist der bereits oben erwähnte Teller. Ein anderes Beispiel für ein Haltemittel ist ein Vorsprung, der beispielsweise in den Dämmstoff eingebracht wird. Hierbei kann es sich beispielsweise um einen Gewindeabschnitt handeln, der an der Außenseite des Dübels angeordnet ist. In dem Haltebereich des Dübels befindet sich auch noch ein Halteschaft.

Wie bereits oben erwähnt, ist das Befestigungselement in einen Bereich derart ausgestaltet, dass es zusammen mit dem Dübel eine Befestigung des Dübels in dem Untergrund erzielt. Dieser Bereich des Befestigungselements wird auch als Befestigungsmittel bezeichnet.

Gemäß der vorliegenden Erfindung weist das Befestigungselement ein Haltegewinde auf. Das Haltegewinde ist in einem anderen Bereich des Befestigungselements angeordnet als das Befestigungsmittel und das Haltegewinde ist derart ausgestaltet, dass es bei der Montage des Befestigungssystems zumindest zeitweise in den Halteschaft des Dübels eingreift. Wegen dem Zusammenspiel mit dem Halteschaft und zur Abgrenzung gegenüber anderen Gewinden, die in der vorliegenden Anmeldung erwähnt werden, wird dieses Gewinde als Haltegewinde bezeichnet. Durch das Haltegewinde wird sichergestellt, dass beim Einbringen des Befestigungssystems, beispielsweise in ein Bohrloch in dem Untergrund, keine Relativbewegung zwischen dem Befestigungsbereich und dem Haltebereich des Dübels stattfindet. Das Haltegewinde sorgt außerdem dafür, dass das Befestigungselement in dem Dübel einen besseren Vortrieb hat und unterstützt somit substantiell das Eintreiben des Befestigungselements.

Im Folgenden wird die Funktionsweise des Haltegewindes anhand eines Ausführungsbeispiels beschrieben, bei dem das Befestigungselement das Haltegewinde aufweist.

In einer bevorzugten Ausführungsform der vorliegenden Erfindung weist der Halteschaft ein Gewinde auf, in das das Haltegewinde des Befestigungselements bei der Montage eingreift. Diese Gewinde des Halteschafts ist vorzugsweise an der Innenseite des Halteschafts angeordnet. In einer alternative Ausführungsform ist der Halteschaft derart ausgestaltet, dass das Haltegewinde des Befestigungselements Gegenmittel in dem Halteschaft bildet. Beispielsweise kann der Halteschaft an seiner Innenseite Vorsprünge aufweisen, die sich beispielsweise axial erstrecken. Beim Eindrehen des Befestigungselements in den Dübel und insbesondere in den Haltebereich formt das Haltegewinde des Befestigungselements in den Vorsprüngen Öffnungen. Diese Öffnungen können beispielsweise wie ein zum Haltegewinde komplementäres Gewinde wirken. Dadurch wird eine ungewollte Axialverschiebung des Befestigungselements in dem Haltebereich verhindert.

In einer weiteren bevorzugten Ausführungsform ist der Dübel derart ausgestaltet, dass sich der Befestigungsbereich des Dübels und der Haltebereich des Dübels relativ zueinander bewegt werden können. Der Befestigungsbereich und der Haltebereich können zueinander hinbewegt werden, voneinander weg bewegt werden oder beides. Dabei sind dem Fachmann verschiedene Möglichkeiten bekannt, wie dies realisiert werden kann. Gemäß einer bevorzugten Ausführungsform sind der Befestigungsbereich und der Haltebereich des Dübels derart ausgestaltet, dass sie jeweils zumindest zum Teil separate Bauteile bilden. Diese separaten Bauteile können beispielsweise derart ausgestaltet sein, dass sie zunächst von einander beabstandet sind und bei der Montage zueinander hin beweget werden. Es ist aber auch möglich, dass die beiden Bauteile bereits in unmittelbarer Nähe zueinander angeordnet sind und bei der Montage zumindest teilweise teleskopartig übereinander geschoben werden.

Grundsätzlich können die beiden Bauteile des Dübels aber auch miteinander verbunden sein. Das Bauteil mit dem Befestigungsbereich und das Bauteil mit dem Haltebereich werden dann beispielsweise bei der Montage voneinander getrennt, beispielsweise an einer Sollbruchstelle. Der Dübel kann aber auch beispielsweise einen Bereich aufweisen, in dem er gestaucht oder gestreckt werden kann, so dass sich das Bauteil mit dem Befestigungsbereich und das Bauteil mit dem Haltebereich zueinander hin oder voneinander wegbewegen können. Aber dies sind nur Beispiele für eine Vielzahl von Möglichkeiten den Dübel derart auszugestalten, dass die Bauteile relativ zueinander bewegt werden können. Im Rahmen der vorliegenden Erfindung werden Dübel, bei denen diese Bauteile eine Relativbewegung durchführen können, als teleskopierbare Dübel bezeichnet.

Im Rahmen der Erfindung ist das Haltegewinde derart ausgestaltet, dass das Haltegewinde nur zeitweise in den Halteschaft eingreift. Bei der Montage des Befestigungssystems wird das Befestigungssystem in ein Bohrloch in dem Dämmstoff und gegebenenfalls in dem Untergrund eingebracht und dann das Befestigungselement in den Dübel eingetrieben, bis der Dübel in oder an dem Untergrund befestigt ist und der Haltebereich des Dübels den Dämmstoff hält. Gemäß der Erfindung greift das Haltegewinde nicht während der gesamten Montage in den Halteschaft. Wichtig ist, dass das Haltegewinde während dem Einbringen des Befestigungssystems in das Bohrloch in den Halteschaft eingreift, um eine Axialverschiebung des Haltebereichs gegenüber dem Befestigungsbereich des Dübels zu verhindern. Das Eingreifen des Haltegewindes findet in den Halteschaft auch am Anfang des Eintreibens des Befestigungselements in den Dübel statt, um den Vortrieb des Befestigungselements in dem Dübel zu unterstützen. In diesem Fall sorgt das Eingreifen des Haltegewindes in den Halteschaft bei einem Eindrehen des Befestigungselements zur einer kontrollierten Bewegung des Befestigungselements relativ zu dem Haltebereich. Gegen Ende der Montage, wenn sich zum Beispiel das hintere Ende des Befestigungselements in der Nähe des Dämmstoffs befindet, wird das Eingreifen des Haltegewindes in den Halteschaft enden, so dass der Halteschaft beziehungsweise der Haltebereich des Dübels axial gegenüber dem Befestigungselement bewegt werden kann. Hierdurch kann der Monteur den Druck, mit dem der Dämmstoff gegen den Untergrund gedrückt wird frei einstellen. Hierfür weisen das Befestigungselement oder der Haltebereich oder beide Mittel auf, mit denen der Haltebereich in einer Endposition an dem Befestigungselement fixiert werden kann.

Gemäß einer Ausführungsform weist das Befestigungselement einen Kopfbereich auf, der - wenn das Haltegewinde nicht mehr in den Halteschaft eingreift - an einem Anschlag des Haltebereichs anliegen kann.

Das Beenden des Eingreifens des Haltegewindes kann mit unterschiedlichsten Mittel realisiert werden. Wenn beispielsweise die bereits erwähnten Vorsprünge an der Innenseite des Halteschafts angeordnet sind, können diese derart ausgestaltet sein, dass das Haltegewinde nicht auf der ganzen axialen Erstreckung des Halteschafts in die Vorsprünge greifen kann. Dies kann beispielsweise dadurch erzielt werden, dass sich in dem Bereich des Halteschafts, in dem sich das Haltegewinde am Ende der Montage befindet, keine Vorsprünge befinden oder die Vorsprünge nicht mehr so weit in den Halteschaft hineinragen, dass das Haltegewinde in sie eingreifen kann. Grundsätzlich ist es aber auch möglich, dass die Vorsprünge oder das Haltegewinde derart ausgestaltet sind, dass sie ab einer bestimmten Kraft keine Funktion mehr haben. Sobald der Kopfbereich an dem Anschlag anliegt, verhindert dies eine Bewegung des Haltegewindes relativ zu dem Halteschaft. Wenn aber zu diesem Zeitpunkt das Haltegewinde immer noch in den Halteschaft beziehungsweise seine Vorsprünge eingreift, brechen die Vorsprünge und/oder das Haltegewinde weg oder werden verbogen, so dass sie keine Funktion mehr haben.

Im Rahmen der vorliegenden Erfindung wird von einer Befestigung des Dübels am Untergrund gesprochen, wobei dies auch eine Befestigung im Untergrund umfassen soll. Bei einer derartigen Befestigung muss nicht der gesamte Dübel unmittelbar am Untergrund befestigt werden. Wie oben erläutert, kann der Dübel aus mehreren separaten Bauteilen bestehen. Die müssen nicht alle unmittelbar an dem Untergrund befestigt werden, sondern können auch mittelbar - beispielsweise über das Befestigungselement - an dem Untergrund befestigt sein. Der Haltebereich des Dübels kann beispielsweise unmittelbar an dem Befestigungselement befestigt sein, welches unmittelbar an dem Befestigungsbereich des Dübels befestigt ist, welcher an dem Untergrund befestigt ist, so dass der Haltebereich des Dübels mittelbar an dem Untergrund befestigt ist.

In einer bevorzugten Ausführungsform ist das Befestigungselement eine Schraube, die als Befestigungsmittel ein Gewinde aufweist, das zur besseren Unterscheidbarkeit als Befestigungsgewinde bezeichnet wird. Vorzugsweise hat das Befestigungsgewinde im Wesentlichen die gleiche Steigung wie das Haltegewinde. Außerdem weist in einer weiteren bevorzugten Ausführungsform der Dübel an dem Befestigungsbereich einen Befestigungsschaft auf. In dem Befestigungsschaft ist mindestens ein Vorsprung angeordnet, der ausgestaltet ist, um mit dem Befestigungsgewinde zusammenzuwirken. In einer bevorzugten Ausführungsform ist der mindestens eine Vorsprung als Innengewinde ausgestaltet. Der Befestigungsschaft ist derart ausgestaltet, dass der mindestens eine Vorsprung und das Befestigungsgewinde eine axiale Befestigung des Befestigungselements in dem Dübel verursachen. Diese axiale Befestigung zwischen dem Befestigungselement und dem an dem Befestigungsbereich angeordneten Befestigungsschaft ist insbesondere bei dem Einbringen des Befestigungssystems in das Bohrloch hilfreich, weil dadurch eine ungewollte Bewegung des Befestigungsbereichs relativ zu dem Befestigungselement und durch das Haltegewinde auch relativ zu dem Haltebereich des Dübels verhindert wird. Darüber hinaus unterstützt das Zusammenspiel zwischen dem Vorsprung und dem Befestigungsgewinde beim Vortrieb des Befestigungselements in den Befestigungsbereich.

Dass sich der mindestens eine Vorsprung in einem an dem Befestigungsbereich angeordneten Befestigungsschaft befindet, bedeutet nicht notwendigerweise, dass der Befestigungsschaft nicht auch zur Befestigung des Dübels im Untergrund dienen kann. In einer bevorzugten Ausführungsform sind der Befestigungsschaft und der darin angeordnete mindestens eine Vorsprung derart ausgestaltet, dass sich durch das Anordnen des Befestigungselements in einer ersten Position in dem Befestigungsschaft der Außenumfang des Befestigungsschafts nicht vergrößert, insbesondere sich nicht derart verändert, dass ein Einbringen des Befestigungsschafts in das Bohrloch in dem Untergrund beeinflusst wird. Mit anderen Worten, wenn der Vorsprung das Befestigungselement beim Einbringen des Befestigungssystems hält, soll dies keine negativen Auswirkungen auf das das Einbringen des Befestigungssystems in den Untergrund haben. Im Rahmen der Erfindung kann der Befestigungsschaft aber auch derart im Dübel angeordnet sein, dass er sich bei bestimmungsgemäßer Verwendung nach der Montage nur in dem Bohrloch in dem Dämmstoff und nicht in dem Bohrloch in dem Untergrund befindet.

Die erfindungsgemäße Aufgabe wird außerdem durch ein Verfahren zur Befestigung eines Dämmstoffs an einem Untergrund mit einem Befestigungssystem gelöst. Im Rahmen des Verfahrens wird das Befestigungssystem in eine Öffnung, vorzugsweise ein Bohrloch, in einem Untergrund und in einem Dämmstoff eingeführt. Das Befestigungssystem besteht aus einem Dübel und einem Befestigungselement. Der Dübel weist einen Befestigungsbereich auf, der ausgestaltet ist, um in dem Untergrund befestigt zu werden. Der Haltebereich ist ausgestaltet, um den Dämmstoff zu halten. Das Befestigungsmittel weist ein Haltegewinde auf, das ausgestaltet ist, um in einen Halteschaft in dem Haltebereich einzugreifen und somit den Haltebereich an dem Befestigungselement axial zu fixieren. Erfindungsgemäß wird anschließend das Befestigungselement in den Dübel getrieben, wobei sich ein vorderer Bereich des Befestigungselements in den Befestigungsbereich des Dübels bewegt und diesen an oder in dem Untergrund befestigt. Dieses Verfahren wird auch als die Montage des Befestigungssystems bezeichnet.

Im Folgenden werden das erfindungsgemäß Befestigungssystem und das erfindungsgemäße Verfahren beispielhaft anhand der folgenden Figuren, die eine Ausführungsform der vorliegenden Erfindung zeigen, erläutert.
- Figur 1: zeigt eine Querschnittsansicht durch ein erfindungsgemäßes Befestigungssystem mit einem Dübel und einem Befestigungselement;
- Figur 2: zeigt eine Querschnittsansicht des Dübels aus Figur 1;
- Figur 3: zeigt eine Außenansicht und eine Querschnittsansicht des Befestigungselements aus Figur 1; und
- Figuren 4a bis 4c: zeigen das erfindungsgemäße Verfahren.

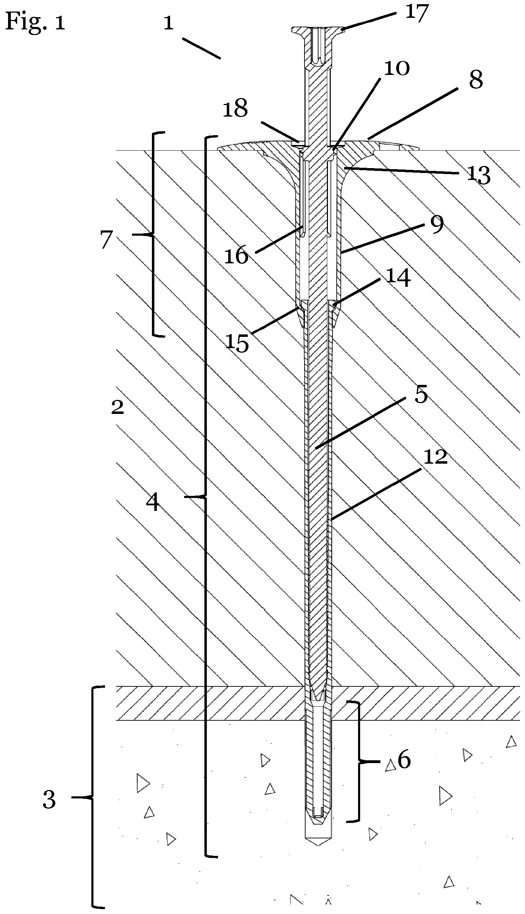

Figur 1 zeigt eine Ausführungsform des erfindungsgemäßen Befestigungssystems 1. Das Befestigungssystem soll einen Dämmstoff 2 in oder an einem Untergrund 3 befestigen. Bei der im Folgenden gezeigten Ausführungsform wird das Befestigungssystem 1 in einem Bohrloch in dem Untergrund 3 befestigt.

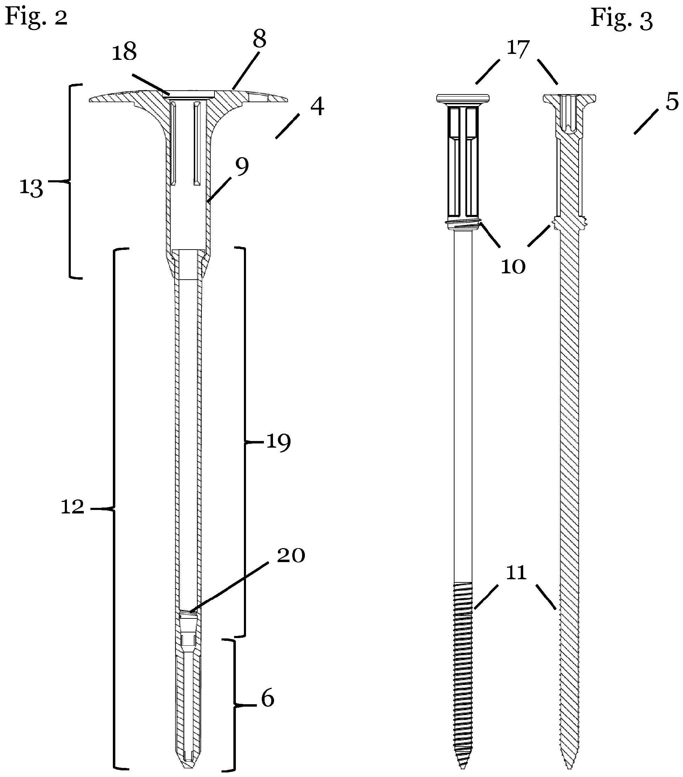

Das Befestigungssystem 1 weist einen Dübel 4 und ein Befestigungselement 5 auf, wobei der Dübel 4 in Figur 2 und das Befestigungselement 5 in Figur 3 noch einmal gezeigt werden. Der Dübel 4 weist einen Befestigungsbereich 6 und einen Haltebereich 7 auf. Der Haltebereich 7 weist ein Haltemittel 8 auf, das in der vorliegenden Ausführungsform als Teller ausgestaltet ist. Darüber hinaus weist der Haltebereich einen Halteschaft 9 auf. Bei dem erfindungsgemäßen Befestigungssystem 1 weist das Befestigungselement 5 ein Haltegewinde 10 auf. Dieses Haltegewinde 10 ist derart ausgestaltet und an dem Befestigungselement 5 angeordnet, dass es bei der Montage in den Halteschaft 9 des Haltebereichs 7 eingreift.

Das Befestigungselement 5 weist auch einen Bereich auf, der dafür ausgestaltet ist, um zusammen mit dem Befestigungsbereich 6 des Dübels 4 den Dübel an oder in dem Untergrund 3 zu befestigen. Dieser Bereich wird im Folgenden auch als Befestigungsmittel bezeichnet.

Der Dübel 4 ist derart ausgestaltet, dass der Befestigungsbereich 6 und der Haltebereich 7 relativ zueinander bewegt werden können. In der in den Figuren gezeigten Ausführungsform weist der Dübel dafür zwei separate Bauteile auf, wobei das eine Befestigungsbauteil 12 den Befestigungsbereich 6 enthält und das andere Haltebauteil 13 den Haltebereich 7 enthält. In der vorliegenden Ausführungsform hat das Befestigungsbauteil 12 einen Außendurchmesser, der geringer oder gleich dem Innendurchmesser des Haltebauteils 13 ist, so dass das Befestigungsbauteil 12 innerhalb des Haltebauteils 13 bewegt werden kann. In der vorliegenden Ausführungsform weisen die Bauteile Mittel auf, um die Relativbewegung der Bauteile zueinander in eine Richtung zu begrenzen. Hierfür weist das Befestigungsbauteil 12 an dem äußeren Umfang an seinem hinteren Endbereich, das heißt an dem Endbereich, der im montierten Zustand der Außenseite des Dämmstoffs am nächsten ist, einen Vorsprung 14 auf und das Haltebauteil 13 an der Innenseite in einem vorderen Endbereich, das heißt an dem Endbereich, der im montierten Zustand dem Untergrund am nächsten ist, einen korrespondierenden Vorsprung 15 auf.

In der in Figur 1 gezeigten Ausführungsform weist der Halteschaft 9 an seiner Innenseite axiale ausgerichtete Vorsprünge 16 auf. Die Vorsprünge 16 sind derart ausgestaltet, dass bei einem Eindrehen des Befestigungselements 5 in den Dübel 4 das Haltegewinde 10 in die Vorsprünge 16 korrespondierende Öffnungen schneidet bzw. formt, die wie ein Gegengewinde wirken. Durch das Eintreiben des Befestigungselements 5, vorzugsweise durch Einschrauben, bewegt sich das Befestigungselement 5 in einer vorbestimmten Art und Weise relativ zum Haltebereich 7 und relativ zum Befestigungsbereich 6. Das Haltemittel 8 kann beispielsweise auf dem Dämmstoff 2 aufliegen, während sich das Befestigungselement 5 in den Dämmstoff 2 hineinbewegt. Die Vorsprünge 16 und/oder das Haltegewinde 10 sind aber derart ausgestaltet, dass ab einer bestimmten Position des Befestigungselements 5 in dem Haltebereich 7, das Haltegewinde 10 nicht mehr in die Vorsprünge eingreift. Dies wird hier dadurch erzielt, dass sich die Vorsprünge 16 nicht über die gesamte Länge des Halteschafts 9 erstrecken. Sobald sich das Haltegewinde 10 in dem Bereich ohne Vorsprünge 16 befindet, findet die durch das Haltegewinde 10 definierte Relativbewegung zwischen Befestigungselement 5 und Halteschaft 9 nicht mehr statt.

In der in Figur 1 gezeigten Ausführungsform weist das Befestigungselement 5 auch einen Kopfbereich 17 auf, der - wenn das Haltegewinde 10 nicht mehr in den Halteschaft 9 eingreift - an einem Anschlag 18 des Haltebereichs 7 anliegen kann. Diese beiden Elemente sorgen dafür, dass sich das Befestigungselement 5 und der Haltebereich 7 des Dübels 4, insbesondere das Haltemittel 8 gleichartig axial bewegen. So kann durch das Eintreiben des Befestigungselements 5 der Druck bestimmt werden, mit dem das Haltemittel 8, beispielsweise in Form eines Tellers, auf den Dämmstoff 2 drückt und diesen damit halten.

Figur 2 zeigt den bereits in Figur 1 gezeigten Dübel 4, allerdings ohne das Befestigungselement 5. Aus dieser Ansicht ist ersichtlich, dass der Dübel 4 an dem Befestigungsbereich 6 einen Befestigungsschaft 19 aufweist, in dem mindestens ein Vorsprung angeordnet ist, der in dieser Ausführungsform als Innengewinde 20 ausgestaltet ist. Der Befestigungsschaft 19 ist derart ausgestaltet, dass das Innengewinde 20 und das Befestigungsgewinde 11 eine axiale Befestigung des Befestigungselements 5 in dem Dübel 4 verursachen. Diese axiale Befestigung zwischen dem Befestigungselement 5 und dem an dem Befestigungsbereich 6 angeordneten Befestigungsschaft 19 ist insbesondere bei dem Einbringen des Befestigungssystems 1 in das Bohrloch hilfreich, weil dadurch eine Relativbewegung zwischen dem Befestigungsbereich 6 und dem Haltebereich 7 des Dübels 4 verhindert wird. Darüber hinaus unterstützt das Zusammenspiel zwischen dem Innengewinde 20 und dem Befestigungsgewinde 11 beim Vortrieb des Befestigungselements 5 in den Befestigungsbereich 6.

Figur 3 zeigt das bereits in Figur 1 gezeigte Befestigungselement 5, einmal in der Außenansicht und einmal in der Querschnittsansicht. Das hier gezeigt Befestigungselement 5 ist eine Schraube, die aus einen glasfaserverstärktem Kunststoff besteht. Das Befestigungselement 5 weist ein Befestigungsgewinde 11 auf. Darüber hinaus weist das Befestigungselement 5 in einem von dem Befestigungsgewinde 11 beabstandeten Bereich das Haltegewinde 10 auf.

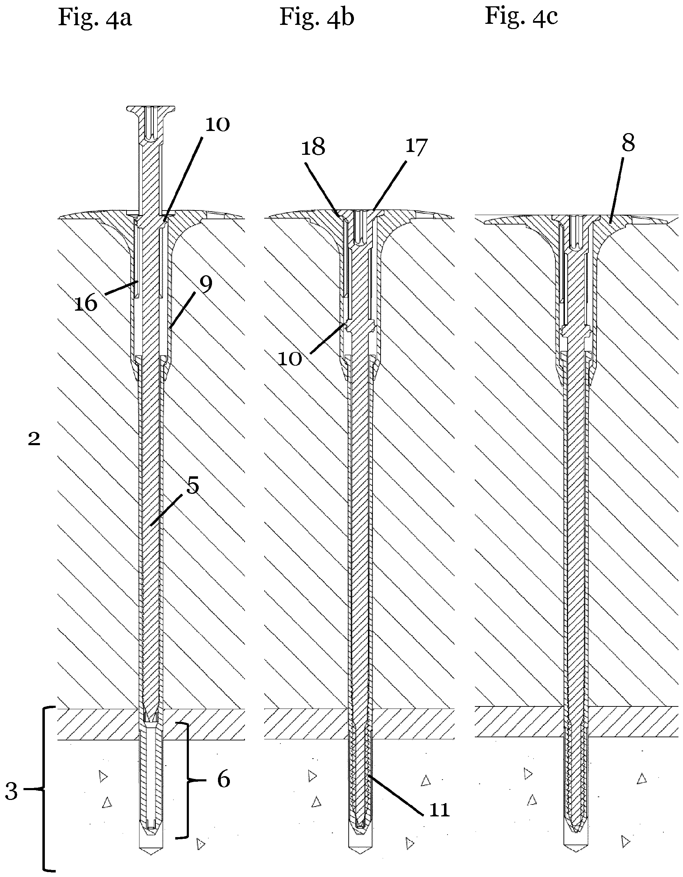

Die Figuren 4a bis 4c zeigen beispielhaft auf der Grundlage der anhand der anderen Figuren beschriebenen bevorzugten Ausführungsform den Ablauf der Montage des erfindungsgemäßen Befestigungssystems 1. Vor der Montage wird in den zu befestigenden Dämmstoff 2 und in den Untergrund 3, der hier aus zwei Schichten besteht, ein Loch gebohrt. In diesem Loch wird dann das erfindungsgemäße Befestigungssystem 1 angeordnet, so dass sich der Befestigungsbereich 6 des Dübels 4 in dem Loch in dem Untergrund 3 befindet. Die Spitze des Befestigungselements 5 befindet sich nach dem Anordnen des Befestigungssystems 1 in dem Loch und vor dem Eintreiben vor dem Befestigungsbereich 6 des Dübels 4. Dies ist in den meisten Fällen bereits deshalb der Fall, weil der Dübel 4 in dem Befestigungsbereich 6 derart ausgestaltet ist, dass er von dem Befestigungselement 5 aufgespreizt wird und dies nur mit einer erhöhten Kraft möglich ist. In der vorliegenden Ausführungsform wird das ungewollte Bewegen des Befestigungselements 5 in den Befestigungsbereich 6 auch durch das Innengewinde 20 (vgl. Figur 2) verhindert.

Bei dem Anordnen des Befestigungssystems 1 in dem Bohrloch besteht auch zwischen dem Haltegewinde 10 des Befestigungselements 5 und dem Dübel 4, insbesondere dem Halteschaft 9 des Dübels 4 eine Verbindung. Diese wird durch das Eingreifen des Haltegewindes 10 des Befestigungselements 5 in den Halteschaft 9 beziehungsweise in die in dem Halteschaft 9 angeordneten Vorsprünge 16 erzielt.

Diese beiden Verbindungen bewirken, dass sich die beiden Bauteile 12, 13 (vgl. Figur 2) des Dübels 4 bei dem Anordnen in dem Bohrloch nicht zueinander hin oder voneinander wegbewegen. Wenn also der Monteur dieses Befestigungssystem 1 in dem Bohrloch anordnet, kann er anhand der Position des hinteren Endes des Dübels 4, beispielsweise des Tellers 8, relativ zum Dämmstoff 2 sehen, wie weit der Dübel 4 im Bohrloch ist. Dies ist ein Hinweis darauf, ob der Befestigungsbereich 6 des Dübels 4 in dem Untergrund 3 ist und somit eine feste Verbindung erzielt werden kann oder nicht.

Durch die Ausgestaltung des erfindungsgemäßen Befestigungssystems 1 kann aber die Verbindung zwischen dem Halteschaft 9 und dem Befestigungselement 5 aufgehoben werden, so dass der Dübel 4 am Ende der Montage teleskopiert werden kann.

Figur 4b veranschaulicht die Ausführungsform des erfindungsgemäßen Befestigungssystems 1 zu einem Zeitpunkt, wenn das Befestigungselement 5 weiter in den Dübel 4 bewegt wurde. Bei der hier gezeigten Ausführungsform ist das Befestigungselement 5 eine Schraube, die in den Dübel 4 gedreht wird. Durch diese Drehbewegung, arbeitet sich das Befestigungsgewinde 11 des Befestigungselement 5 in den Befestigungsbereich 6 des Dübels 4. Gleichzeitig hat sich das Haltegewinde 10 an dem Befestigungselement 5 relative zum Halteschaft 9 vorwärtsbewegt. So lange das Haltegewinde 10 in den Halteschaft 9 eingreift, bewirkt dies eine vorbestimmte Relativbewegung der beiden Bauteile 12, 13. Sobald aber keine Verbindung mehr zwischen dem Haltegewinde 10 und dem Halteschaft 9 besteht, wie dies in Figur 4b veranschaulicht ist, ist der Haltebereich 7 des Dübels 4 nicht mehr am Befestigungselement 5 befestigt. Dadurch wird ermöglicht, dass ein Vorwärtsbewegen des Befestigungselements 5 in gleicher Weise zu einem Vorwärtsbewegen des Haltebauteils 13 führt. In der vorliegenden Ausführungsform wird dies durch den Kopfbereich 17 des Befestigungselements 5 ermöglicht, der an einem Anschlag 18 des Dübels 4 anliegen kann.

Durch ein weiteres Einschrauben des Befestigungselements 5 wird das Befestigungselement 5 weiter in den Befestigungsbereich 6 des Dübels 4 bewegt. Da der Kopfbereich 17 des Befestigungselements auf dem Anschlag 18 des Haltebauteils 13 aufliegt, bewegt sich das Haltebauteil 13 in gleicher Weise wie das Befestigungselement 5 in Richtung Untergrund 3. Dadurch kann, wie in Figur 4c veranschaulicht, mit dem Teller 8 des Dübels 4 ein Druck auf den zu befestigenden Dämmstoff 2 ausgeübt werden.

## Patentansprüche

1. Ein Befestigungssystem (1) zur Befestigung eines Dämmstoffs (2) an einem Untergrund (3), wobei das Befestigungssystem (1) aufweist:
einen Dübel (4) und
ein Befestigungselement (5) und
wobei der Dübel (4) einen Befestigungsbereich (6) und einen Haltebereich (7) mit einem Haltemittel (8) und einem Halteschaft (9) aufweist und der Befestigungsbereich (6) ausgestaltet ist, um zusammen mit einem entsprechenden Bereich des Befestigungselements (5) den Dübel (4) in dem Untergrund (3) zu befestigen,
**dadurch gekennzeichnet, dass**
das Befestigungselement (5) ein von dem entsprechenden Bereich des Befestigungselements (5) beabstandetes Haltegewinde (10) aufweist, das beim Einführen des Befestigungssystems (1) in eine Öffnung in dem Dämmstoff (2) und am Anfang eines Eintreibens des Befestigungselements (5) in den Dübel (4) in den Halteschaft (9) eingreift, aber gegen Ende des Eintreibens das Eingreifen in den Halteschaft (9) endet.

2. Das Befestigungssystem (1) gemäß Anspruch 1, wobei der Halteschaft (9) Vorsprünge (16) aufweist, in die das Haltegewinde (10) des Befestigungselements (5) eingreift.

3. Das Befestigungssystem (1) gemäß einem der vorhergehenden Ansprüche, wobei der Dübel (4) derart ausgestaltet ist, dass der Befestigungsbereich (6) des Dübels (4) und der Haltebereich (7) des Dübels (4) relativ zueinander bewegt werden können.

4. Das Befestigungssystem (1) gemäß Anspruch 3, wobei der Befestigungsbereich (6) des Dübels (4) und das Halteberich (7) des Dübels (4) jeweils zumindest zum Teil separate Bauteile (12, 13) sind.

5. Das Befestigungssystem (1) gemäß einem der Ansprüche 3 oder 4, wobei ein Bauteil (12) mit dem Befestigungsbereich (6) des Dübels (4) oder ein Bauteil (13) mit dem Haltebereich (7) des Dübels (4) zumindest teilweise teleskopartig über das andere von den beiden Bauteilen (12, 13) bewegt werden kann.

6. Das Befestigungssystem (1) gemäß einem der vorhergehenden Ansprüche, wobei das Befestigungselement (5) eine Schraube ist.

7. Das Befestigungssystem (1) gemäß Anspruch 6, wobei die Schraube ein Befestigungsgewinde (11) mit einer Steigung aufweist, die im Wesentlichen der Steigung des Haltegewindes (10) des Befestigungselements (5) entspricht.

8. Das Befestigungssystem (1) gemäß einem der Ansprüche 6 oder 7, wobei der Dübel (4) einen Befestigungsschaft (19) aufweist und wobei sich in dem Befestigungsschaft (19) ein Gewinde (20) zum Eingriff in das Befestigungsgewinde (11) der Schraube befindet.

9. Ein Verfahren zur Befestigung eines Dämmstoffs (2) an einem Untergrund (3) mit einem Befestigungssystem (1), wobei das Verfahren die folgenden Schritte aufweist:
Einführen des Befestigungssystems (1) in eine Öffnung in dem Dämmstoff (2) und in dem Untergrund (3), wobei das Befestigungssystem (1) einen Dübel (4) und ein Befestigungselement (5) aufweist und wobei der Dübel (4) einen Befestigungsbereich (6) und einen Haltebereich (7) mit einem Haltemittel (8) und einem Halteschaft (9) aufweist und der Befestigungsbereich (6) ausgestaltet ist, um zusammen mit einem entsprechenden Bereich des Befestigungselements (5) den Dübel (4) in dem Untergrund (3) zu befestigen und wobei das Befestigungselement (5) ein von dem entsprechenden Bereich des Befestigungselements (5) beabstandetes Haltegewinde (10) aufweist, das bei dem Einführen des Befestigungssystems (1) in den Halteschaft (9) eingreift; und
Eintreiben des Befestigungselements (5) in den Befestigungsbereich (6) des Dübels (4), wobei das Haltegewinde (10) am Anfang des Eintreibens in den Halteschaft (9) eingreift, aber gegen Ende des Eintreibens das Eingreifen endet.

## Claims

1. A fastening system (1) for fastening an insulating material (2) at a substrate (3), wherein the fastening system (1) comprises:
a dowel (4) and
a fastening element (5) and
wherein the dowel (4) comprises a fastening portion (6) and a holding portion (7) having a holding means (8) and a holding shaft (9), and wherein the fastening portion (6) is designed to fasten, together with a corresponding portion of the fastening element (5), the dowel (4) in the substrate (3),
**characterized in that**
the fastening element (5) comprises a holding thread (10) spaced apart from the corresponding portion of the fastening element (5), which during insertion of the fastening system (1) into an opening in the insulating material (2) and at the beginning of a driving of the fastening element (5) into the dowel (4) engages with the holding shaft (9), but towards the end of the driving the engaging with the holding shaft (9) ends.

2. The fastening system (1) according to claim 1, wherein the holding shaft (9) comprises projections (16) with which the holding thread (10) of the fastening element (5) engages.

3. The fastening system (1) according to any of the preceding claims, wherein the dowel (4) is designed such that the fastening portion (6) of the dowel (4) and the holding portion (7) of the dowel (4) can be moved relative to each other.

4. The fastening system (1) according to claim 3, wherein the fastening portion (6) of the dowel (4) and the holding portion (7) of the dowel (4) are each at least partially separate components (12, 13).

5. The fastening system (1) according to one of claims 3 or 4, wherein one component (12) with the fastening portion (6) of the dowel (4) or one component (13) with the holding portion (7) of the dowel (4) can be moved at least partially telescopically over the other of the two components (12, 13).

6. The fastening system (1) according to one of the preceding claims, wherein the fastening element (5) is a screw.

7. The fastening system (1) according to claim 6, wherein the screw has a fastening thread (11) with a pitch substantially corresponding to the pitch of the holding thread (10) of the fastening element (5).

8. The fastening system (1) according to one of claims 6 or 7, wherein the dowel (4) comprises a fastening shaft (19), and wherein a thread (20) for engagement with the fastening thread (11) of the screw is located in the fastening shaft (19).

9. A method for fastening an insulating material (2) at a substrate (3) with a fastening system (1), wherein the method comprises the following steps:
inserting the fastening system (1) into an opening in the insulating material (2) and in the substrate (3), wherein the fastening system (1) comprises a dowel (4) and a fastening element (5), and wherein the dowel (4) comprises a fastening portion (6) and a holding portion (7) having a holding means (8) and a holding shaft (9), and wherein the fastening portion (6) is designed to fasten, together with a corresponding portion of the fastening element (5), the dowel (4) in the substrate (3), and wherein the fastening element (5) comprises a holding thread (10) spaced apart from the corresponding portion of the fastening element (5), which during insertion of the fastening system (1) engages with the holding shaft (9); and
driving the fastening element (5) into the fastening portion (6) of the dowel (4), wherein at the beginning of the driving the holding thread (10) engages with the holding shaft (9), but towards the end of the driving the engaging ends.

## Revendications

1. Un système de fixation (1) pour la fixation d'un matériau isolant (2) à un substrat (3), le système de fixation (1) comportant :
une cheville (4) et
un élément de fixation (5) et
la cheville (4) comportant une zone de fixation (6) et une zone de retenue (7) avec un moyen de retenue (8) et une tige de retenue (9), et la zone de fixation (6) étant conçue pour fixer la cheville (4) dans le substrat (3) conjointement avec une zone correspondante de l'élément de fixation (5),
**caractérisé en ce que**
l'élément de fixation (5) comporte un filet de retenue (10) qui est distant de la zone correspondante de l'élément de fixation (5) et qui, lors de l'introduction du système de fixation (1) dans une ouverture pratiquée dans le matériau isolant (2) et au début de l'engagement de l'élément de fixation (5) dans la cheville (4), pénètre dans la tige de retenue (9), mais la pénétration dans la tige de retenue (9) prend fin vers la fin de l'engagement.

2. Le système de fixation (1) selon la revendication 1, dans lequel la tige de retenue (9) comporte des saillies (16) dans lesquelles pénètre le filet de retenue (10) de l'élément de fixation (5).

3. Le système de fixation (1) selon l'une des revendications précédentes, dans lequel la cheville (4) est conçue de façon que la zone de fixation (6) de la cheville (4) et la zone de retenue (7) de la cheville (4) puissent être déplacées l'une par rapport à l'autre.

4. Le système de fixation (1) selon la revendication 3, dans lequel la zone de fixation (6) de la cheville (4) et la zone de retenue (7) de la cheville (4) sont respectivement des composants (12, 13) au moins en partie séparés.

5. Le système de fixation (1) selon l'une des revendications 3 ou 4, dans lequel un composant (12) avec la zone de fixation (6) de la cheville (4) ou un composant (13) avec la zone de retenue (7) de la cheville (4) peut être déplacé au moins en partie télescopiquement sur l'autre des deux composants (12, 13).

6. Le système de fixation (1) selon l'une des revendications précédentes, dans lequel l'élément de fixation (5) est une vis.

7. Le système de fixation (1) selon la revendication 6, dans lequel la vis comporte un filet de fixation (11) avec un pas qui correspond sensiblement au pas du filet de retenue (10) de l'élément de fixation (5).

8. Le système de fixation (1) selon l'une des revendications 6 ou 7, dans lequel la cheville (4) comporte une tige de fixation (19), et dans lequel se trouve dans la tige de fixation (19) un filet (20) pour pénétrer dans le filet de fixation (11) de la vis.

9. Un procédé pour la fixation d'un matériau isolant (2) à un substrat (3) avec un système de fixation (1), dans lequel le procédé comprend les étapes suivantes :
l'introduction du système de fixation (1) dans une ouverture pratiquée dans le matériau isolant (2) et dans le substrat (3), le système de fixation (1) comportant une cheville (4) et un élément de fixation (5), et la cheville (4) comportant une zone de fixation (6) et une zone de retenue (7) avec un moyen de retenue (8) et une tige de retenue (9), et la zone de fixation (6) étant conçue pour fixer la cheville (4) dans le substrat (3) conjointement avec une zone correspondante de l'élément de fixation (5), et l'élément de fixation (5) comportant un filet de retenue (10) qui est distant de la zone correspondante de l'élément de fixation (5) et qui, lors de l'introduction du système de fixation (1), pénètre dans la tige de retenue (9) ; et
l'engagement de l'élément de fixation (5) dans la zone de fixation (6) de la cheville (4), le filet de retenue (10) pénétrant dans la tige de retenue (9) au début de l'engagement, mais la pénétration prenant fin vers la fin de l'engagement.
